# EUROPEAN PATENT SPECIFICATION

(11) **EP 4 253 769 B1**
(45) Date of publication and mention of the grant of the patent: **13.11.2024**
(21) Application number: 22166372.7
(22) Date of filing: 01.04.2022
(51) Int. Cl.: F16B 2/24, F16B 21/06, F16B 21/08

(54) **FASTENING CLIP ASSEMBLY**
BEFESTIGUNGSKLAMMERANORDNUNG
ENSEMBLE PINCE DE FIXATION

(43) Date of publication of application: 04.10.2023
(60) Divisional application: 24162197.8
(73) Proprietor: Illinois Tool Works, Inc., Glenview, Illinois 60025 (US)
(72) Inventor: Diez, Victor, Glenview, IL 60025 (US)
(74) Representative: HGF

(56) References cited:
- EP-A1- 3 748 169
- EP-A1- 3 754 207
- EP-A1- 3 822 497
- WO-A1-2020/030475
- CN-U- 213 176 368
- US-A1- 2015 300 388

## Description

### TECHNICAL FIELD

This invention generally relates to the field of fasteners and in particular, to the field of fastening clips for attaching one or more components, such as airbag devices, to an external structure. More specifically, the present invention relates to a fastening clip assembly for attaching a side-impact airbag or curtain-type airbag to a vehicle structure.

### BACKGROUND

Airbags are safety devices used in the motor industry and which, in combination with other safety components, such as seatbelts, help to reduce fatal accidents in the case of collisions. The tests to which the vehicles have been subjected, as well as mortality statistics, have clearly demonstrated that the use of airbags can considerably improve the safety of automobile occupants and, when combined with other forms of passive safety, such as seat belts, significantly reduce mortality in the case of serious accidents.

Today, manufacturers produce frontal airbags, which are designed to protect the driver and/ or passenger in the event of a head-on collision and, considering their positions, lateral airbags that are installed behind the posts and/or in the sides of the vehicle seats, along with curtain airbags.

Airbags of the curtain type are usually located in the part close to the roof on the sides of the automobile, e.g. situated above the front and rear doors. Such airbags have very rigorous requirements with regards to the goals set for them and the technical challenges that have to be overcome. Typical challenges may be their location in the vehicle and the way they are fastened, required deployment time and the time that the airbag is required to remain inflated. Other challenges may come from the fact that there is only a short distance between the body and the occupant and that there is little vehicle material between the occupant and an impacting vehicle. For example, it is essential that airbags are deployed in a fraction of a second, giving rise to an enormous snatch force on their attachment components, which then suffer the consequences of that impact.

Further, when installing new or restore previously deployed airbags, it is well known in the industry that the installation or restoration is tedious work, comprising steps, such as, (i) dismantling all the attachments of the airbag, (ii) replacing the airbag and installing a new one, and then again (iii) fitting all its attachments. The work involved generally requires the installer to at least partly manually assemble the clip components with the airbag and push the assembly into a vehicle panel or structure to attach or operably couple the airbag to the vehicle.

EP3748169A1 (Illinois Tool Works) discloses a fastening clip for mounting a component part, such as an airbag, to a support structure. The fastening clip comprises a body portion extending between an upper end region and a lower end region along a longitudinal axis. The body portion comprises at least one elastically deflectable retaining member, projecting laterally from said lower end region of said body portion so as to fixingly engage when inserted into an orifice of the support structure. The at least one elastically deflectable retaining member extends through a window formed in the body portion.

### SUMMARY

In accordance with a first aspect the present disclosure there is provided a fastening clip for mounting in a hole of a component, the fastening clip comprising a head portion adapted to be positioned against a first surface of the component and a body portion extending from the head portion and adapted to protrude through the hole in the component,
wherein the body portion comprises an elastically deflectable retaining member adapted to deflect inwardly in a deflecting direction as the body portion is pushed through the hole of the component, and to engage a second surface of the component, opposite to the first surface, to retain the fastening clip in the hole of the component, and
wherein the body portion further comprises an abutment configured to engage the elastically deflectable retaining member as it is deflected inwardly to prevent deformation of the elastically deflectable retaining member in a second direction, generally perpendicular to deflection direction;
wherein the body portion comprises a sidewall extending parallel to the deflection direction of the elastically deformable retaining member, and wherein the abutment is formed on the sidewall.

During mounting of the fastening clip into the hole of the component an insertion force is applied to push the fastening clip through the hole. The insertion force is applied in an insertion direction aligned with the hole in the component. The insertion force acts on the elastically deflectable retaining member as it passes through the hole to deflect the elastically deflectable retaining member inwards. If that insertion force is excessive or not aligned with the hole then the elastically deflectable retaining member may be deformed in the direction that the insertion force is applied, i.e., in the insertion direction. Deformation of the elastically deflectable retaining member in this way may prevent it from functioning properly, and in particular may prevent the elastically deflectable retaining member from returning to the extended position to engage the second surface of the component. The abutment advantageously prevents deformation in the insertion direction and so ensures that the elastically deflectable retaining member functions properly if the insertion force was excessive or mis-aligned.

In examples, the sidewall may be alongside the elastically deflectable retaining member within the body portion and the abutment may be provided on the sidewall to engage the elastically deflectable retaining member as it is deflected inwards.

In examples, the body portion may comprise a first section and a second section opposite to the first section. The sidewall may comprise a first sidewall section extending from the first side section and a second sidewall section extending from the second sidewall section. The sidewall may thus extend between the first section and the second section of the body portion. A tab of the first sidewall section may overlap the second sidewall section and provide the abutment. The abutment may be an edge of the tab overlapping the second sidewall section. The edge of the tab may be directed towards the head portion of the fastening clip. The tab may overlap the second sidewall section on an internal side of the second sidewall section.

In examples, the tab may comprise a protrusion arranged to contact the second sidewall section to space the tab from the second sidewall section. In this way, the abutment may be spaced from the second sidewall section and may be better aligned with the elastically deflectable retaining member.

In examples, the fastening clip comprises a second elastically deflectable retaining member arranged opposite to the elastically deflectable retaining member. The body portion may additionally include a second sidewall, opposite to the sidewall. The second sidewall may be formed in the same manner as the sidewall, i.e., from first and second sidewall sections extending from the first and second sections of the body portion, respectively. A second abutment may be formed on the second sidewall. The second abutment may be formed by a tab extending from the second sidewall section and overlapping the first sidewall section. Accordingly, two abutments may be provided, one of each of the two elastically deflectable retaining members.

In examples, the fastening clip is formed from a folded sheet. In particular, the fastening clip may be formed from a single folded sheet. The head portion may comprise a planar top surface and the first and second sections of the body portion may extend from opposing ends of the top surface. The first and second sections may be joined to the top surface by double folds, each having a first fold such that the sheet extends back on itself, and a second fold merging into the body portion. In this way the head portion is wider than the body portion.

In examples, the elastically deflectable retaining member may extend from a distal end of the second section of the body portion, opposite to the head portion. The elastically deflectable retaining member is folded inwardly into the body portion and protrudes through an opening in the second section of the body portion.

In examples, the elastically deflectable retaining member comprises an end disposed within the body section. The end may be arranged to engage the abutment. The end may extend through the opening in the second section of the body portion.

In examples that include a second elastically deflectable retaining member, the second elastically deflectable retaining member may extend from the distal end of first section of the body portion and through an opening in the first section of the body portion. The second elastically deflectable retaining member is thereby formed opposite the elastically deflectable retaining member.

According to a second aspect of the present disclosure there is also provided a fastening clip assembly for mounting in a hole of a component. The fastening clip assembly comprises the fastening clip described above and an insert configured to be inserted through an opening in the head portion of the fastening clip.

In examples, the insert may extend into the body portion and engage the elastically deflectable retaining member. In particular, the insert may comprise a leg that engages the elastically deflectable retaining member within the body portion. In particular, the leg may engage an end of the elastically deflectable retaining member within the body portion.

During mounting of the fastening clip assembly into the hole of the component an insertion force may be applied on the insert that acts against the elastically deflectable retaining member. This insertion force acts to push the fastening clip assembly through the hole and deflect the elastically deflectable retaining member inwards as it passes through the hole.

As the fastening clip assembly passes through the hole in the component the elastically deflectable retaining member deflects inwards, and as it passes to the second side it returns outward and permits the leg of the insert to move past the elastically deflectable retaining member and the insert can move further into the body portion of the fastening clip. Once the leg has moved past the elastically deflectable retaining member it may prevent inwards movement of the elastically deflectable retaining member, thereby locking the fastening clip assembly in the hole of the component. Movement of the insert into the fastening clip may also provide an indication that the elastically deflectable retaining member has sprung back outwards and is engaged with the second side of the component, indicating correct mounting.

Advantageously, in this example the abutment is configured to prevent deformation of the elastically deflectable retaining member as the insertion force is applied via the insert. As the insertion force is transferred by the insert directly onto the elastically deflectable retaining member, the abutment will prevent this insertion force from deforming the elastically deflectable retaining member in the direction of the insertion force.

In some examples the fastening clip may have a second elastically deflectable retaining member, as described above. In such examples the insert may have first and second legs that engage the elastically deflectable retaining member and the second elastically deflectable retaining member, respectively. The legs may transfer the insertion force onto the elastically deflectable retaining member and the second elastically deflectable retaining member, and may deflect inwards as the elastically deflectable retaining members are deflected inwards. The legs may, respectively, lock the elastically deflectable retaining member and the second elastically deflectable retaining member.

As will be apparent from the accompanying detailed description, the various aspects of the disclosure described above may be combined. In particular, the first and second aspects of the disclosure may be combined with the third and/or fourth and/or fifth aspects of the disclosure. Similarly, the third and/or fourth aspects may be combined with the fifth aspect of the disclosure.

### BRIEF DESCRIPTION OF THE DRAWINGS

The invention is described hereinafter with reference to the accompanying drawings, in which:
FIG. 1 shows a perspective view of a fastening clip assembly;
FIG. 2 shows a side view of the fastening clip assembly;
FIGS. 3A and 3B show perspective and cross-sectional side views, respectively, of the fastening clip of the fastening clip assembly;
FIGS. 4A and 4B show perspective and side views, respectively, of the insert of the fastening clip assembly;
FIGS. 5A, 5B, and 5C show a perspective view, a side view, and a cross-sectional side view, respectively, of the fastening clip assembly in an initial position;
FIGS. 6A and 6B show a side view and a cross-sectional side view of the fastening clip assembly in a locked position;
FIG. 7 shows a cross-sectional perspective view of the fastening clip illustrating the abutment;
FIG. 8 shows a cross-sectional end view of the fastening clip illustrating the abutment;
FIG. 9 shows a side view of the head portion of the insert, and
FIG. 10 shows a perspective view of the head portion of the insert.

### DETAILED DESCRIPTION

The described example embodiment relates to a fastening clip suitable for securing paraphernalia and accessories. The embodiment(s) of the invention are normally applied in vehicles. Although the invention is described with respect to vehicles, the invention is not restricted to vehicles altogether, but may also be used in other structures requiring attachment of accessories or peripheral components to a structure.

Certain terminology is used in the following description for convenience only and is not limiting. The words 'right', `left', 'lower', 'upper', 'front', 'rear', 'upward', 'down' and 'downward' designate directions in the drawings to which reference is made and are with respect to the described component when assembled and mounted. The words 'inner', 'inwardly' and 'outer', 'outwardly' refer to directions toward and away from, respectively, a designated centreline or a geometric centre of an element being described (e.g. central axis), the particular meaning being readily apparent from the context of the description.

Further, as used herein, the terms 'connected', 'attached', 'coupled', 'mounted' are intended to include direct connections between two members without any other members interposed therebetween, as well as, indirect connections between members in which one or more other members are interposed therebetween. The terminology includes the words specifically mentioned above, derivatives thereof, and words of similar import.

Further, unless otherwise specified, the use of ordinal adjectives, such as, 'first', 'second', 'third' etc. merely indicate that different instances of like objects are being referred to and are not intended to imply that the objects so described must be in a given sequence, either temporally, spatially, in ranking or in any other manner.

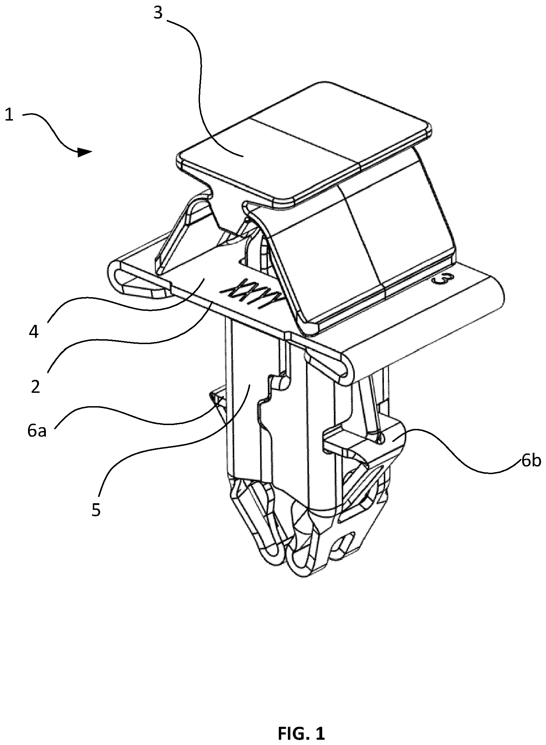

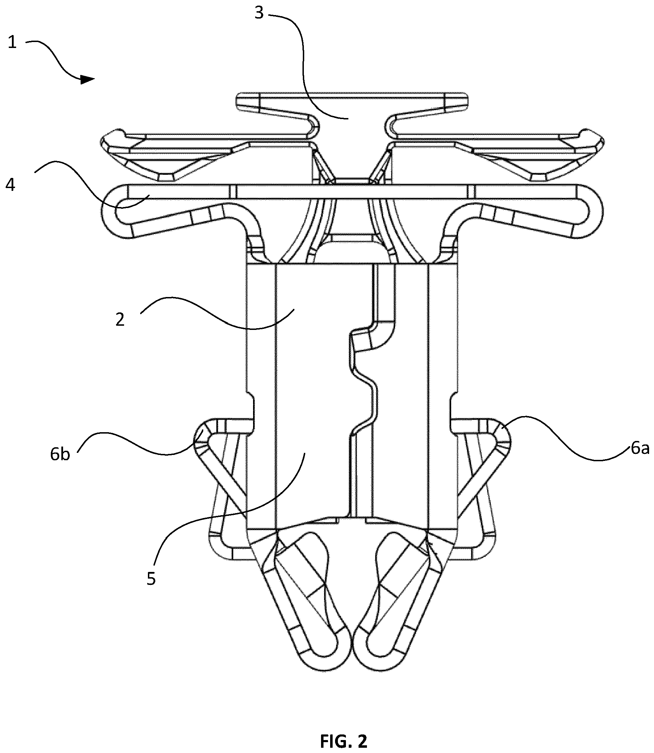

FIGS. 1 and 2 show a fastening clip assembly 1 comprising a fastening clip 2 and an insert 3. As described in more detail hereinafter, the fastening clip 2 comprises a head portion 4, a body portion 5 extending from the head portion 4, and first and second elastically deflectable retaining members 6a, 6b. The insert 3 is insertable into the fastening clip 2 and during assembly with a component the insert 3 moves between an initial position, shown in FIG. 1, and a locked position shown in FIG. 2. In the locked position the fastening clip assembly 1 is assembled in a hole of the component and the insert 3 acts to prevent retraction of the fastening clip assembly 1 from the component.

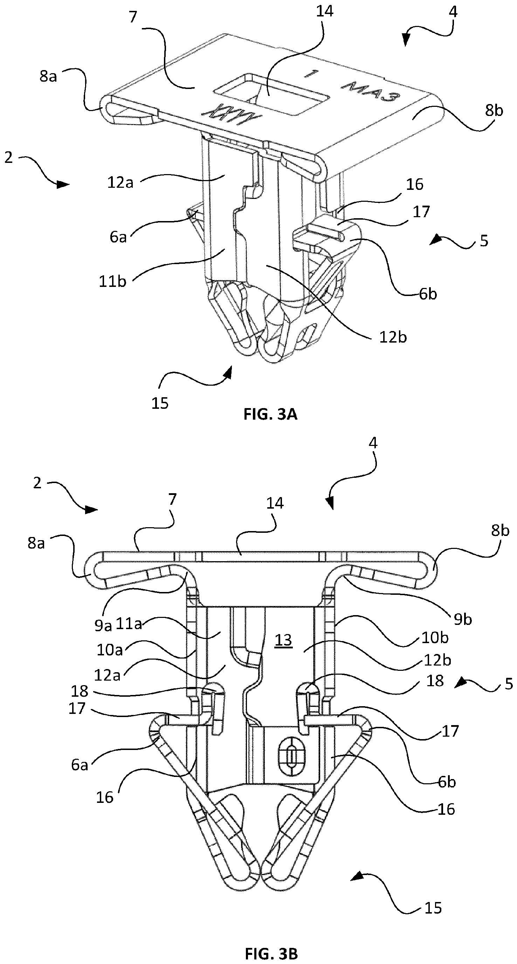

FIGS. 3A and 3B show the fastening clip 2 in isolation, with FIG. 3B showing a cross-section of the fastening clip 2. As illustrated, the body portion 5 extends from the head portion 4. The fastening clip 2 is formed from a folded sheet. The folded sheet is a single piece of material, preferably sheet metal such as stainless steel, folded to form the head portion 4 and the body portion 5.

As illustrated most clearly in FIG. 3B, the head portion 4 comprises a planar (i.e., flat) top wall 7. The head portion 4 comprises first and second bends 8a, 8b at opposite ends of the top wall 7. The first and second bends 8a, 8b extend into opposing bends 9a, 9b that extend into first and second sections 10a, 10b of the body portion 5. The first and second bends 8a, 8b and opposing bends 9a, 9b form double bends that join the head portion 4 to the body portion 5. The first and second sections 10a, 10b of the body portion 5 are substantially parallel to each other and spaced apart. The width of the body portion 5, between the first and second sections 10a, 10b, is less than the width of the head portion 4 due to the double bends. Accordingly, when the body portion 5 is mounted in the hole of the component the head portion 4 abuts the surface of the component.

A first sidewall 11a is formed by a first sidewall section 11a extending from the first section 10a of the body portion 5 and a second sidewall section 11b extending from the second section 10b of the body portion 5. The first and second sidewall sections 12a, 12b meet between the first and second sections 10a, 10b to form the first sidewall 11a.

A second sidewall 11b, shown in FIG. 3A, is formed in the same manner.

Between the first and second sections 10a, 10b and the first sidewall 11a and second sidewall, an internal cavity 13 is defined.

The top wall 7 comprises an opening 14 to receive the insert (3, see FIGS. 1 and 2) as described hereinafter.

The body portion 5 also comprises the first and second retaining members 6a, 6b. As shown, the first retaining member 6a extends from a distal end 15 of the body portion 5 opposite to the head portion 4.

The first retaining member 6a extends from the distal end 15 of the first section 10a of the body portion 5. The first retaining member 6a is bent inwardly into the internal cavity 13 and extends through an opening 16 in the first section 10a of the body portion 5. A retaining portion 17 of the first retaining member 6a is thereby provided externally of the body portion 5. The first retaining member 6a extends back through the opening 16 into the internal cavity 13 where an end 18 of the first retaining member 6a is disposed. The end 18 is not directly connected to the body portion 5 and so can move within the internal cavity. In particular, the first retaining member 6a is elastically deflectable so that the retaining portion 17 can move into the internal cavity 13 during mounting, and will spring back out to the position shown in FIGS. 3A and 3B once the fastening clip 2 has been mounted in the hole as described further hereinafter.

The second retaining member 6b is formed in the same way as the first retaining member 6a and extends from the second section 10b of the body portion 5 and through an opening 16 in the second section 10b of the body portion 5.

The first and second retaining members 6a, 6b are elastically deflectable and act to retain the fastening clip 2 in a hole of a component during use, as described further hereinafter.

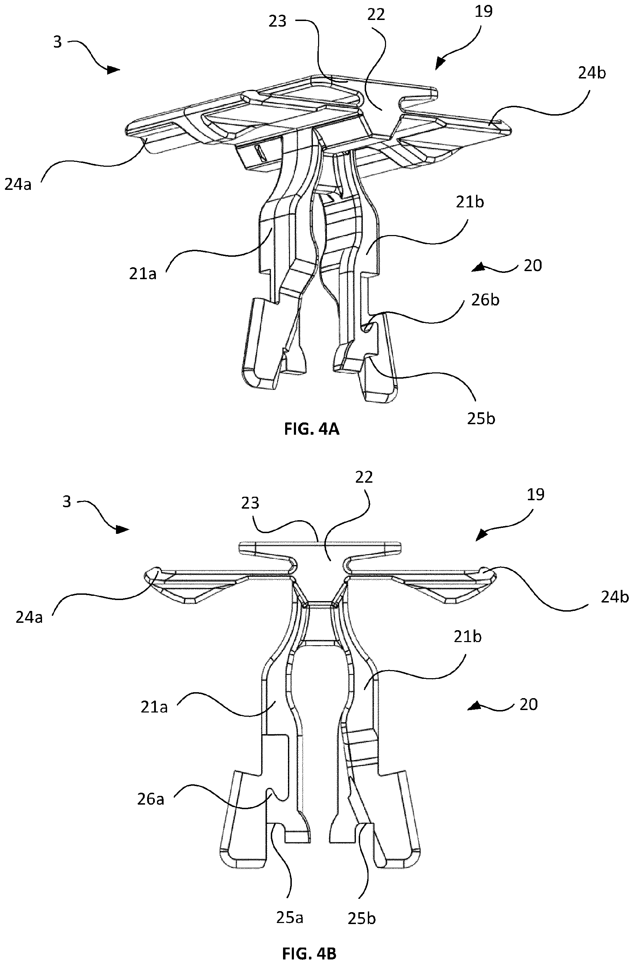

FIGS. 4A and 4B show the insert 3 in isolation. As illustrated, the insert 3 comprises a head portion 19 and a body portion 20. The body portion 20 has a first leg 21a and a second leg 21b. The first leg 21a and the second leg 21b are formed on opposite sides of the insert 3. The first leg 21a and the second leg 21b are separate and so can deflect towards and away from each other, as described further hereinafter.

The insert 3 is preferably formed from a polymer, for example polyoxymethylene. The insert 3 is preferably injection moulded.

The head portion 19 comprises a central part 22 defining a pushing area 23, and first and second deflectable arms 24a, 24b extending sideways. The deflectable arms 24a, 24b may extend sideways in the same direction as the first and second legs 21a, 21b, or perpendicular to the legs 21a, 21b. As described further hereinafter, the fastening clip assembly 1 is mounted to the hole by pushing the central part 22 on the pushing area 23, and the first and second deflectable legs 24a, 24b are deflected sideways as the body portion 5 passes through the hole in the component.

Each of the first leg 21a and the second leg 21b comprises an engaging surface 25a, 25b arranged to engage the retaining members (6a, 6b see FIGS. 3A and 3B) when the fastening clip is assembled. Each of the first leg 21a and the second leg 21b also comprises a hook 26a, 26b configured to engage the retaining members (6a, 6b see FIGS. 3A and 3B) when the fastening clip is mounted to the hole in the component, as described further hereinafter.

The engaging surfaces 25a, 25b face away from the head portion 19, and the hooks 26a, 26b are facing towards the head portion 19, opposite to the engaging surfaces 25a, 25b. FIG. 4A shows the second engaging surface 25b and the second hook 26b, and FIG. 4B shows the first engaging surface 25a and the first hook 26a, as well as the second engaging surface 26b. The second hook 26b is not visible in FIG. 4B.

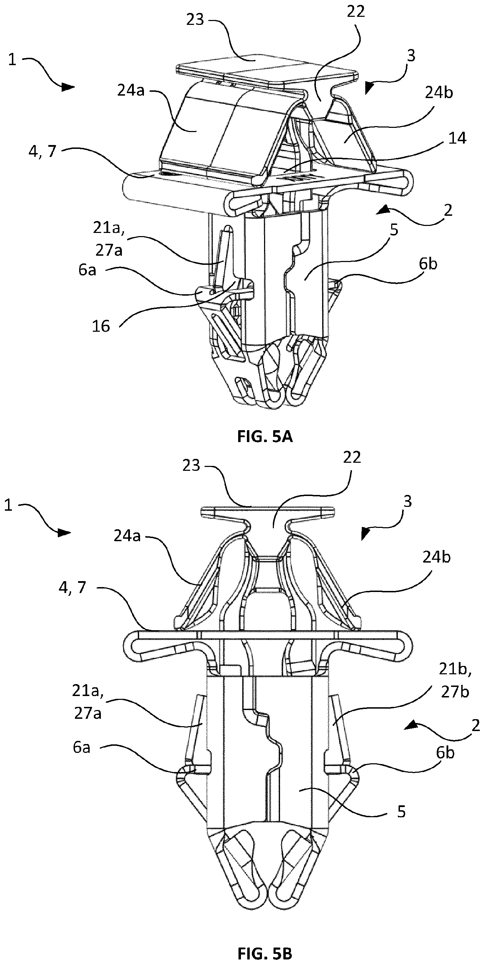

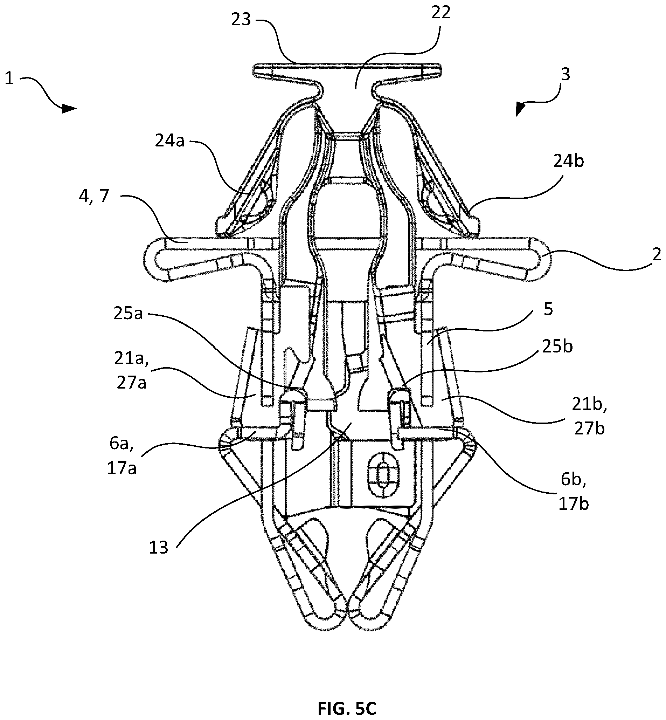

FIGS. 5A to 5C show the fastening clip assembly 1 in an initial, pre-assembled position, before it is mounted to the hole of the component. In this configuration the insert 3 is inserted through the opening 14 in the top wall 7 of the head portion 4. Specifically, the legs 21a, 12b are inserted through the opening 14 and are disposed in the internal cavity 13 of the body portion 5 of the fastening clip 2.

In this initial position the engaging surfaces 25a, 25b of the legs 21a, 21b are in engagement with the retaining portions 17a, 17b of the retaining members 6a, 6b within the internal cavity 13. Specifically, the engaging surfaces 25a, 25b are in engagement with the retaining portions 17a, 17b on a side facing the head portion 4 of the fastening clip 2. Parts 27a, 27b of the legs 21a, 21b protrude through the openings 16 in the side sections 10a, 10b of the body portion 5. The parts 27a, 27b may prevent the insert 3 from being removed from the fastening clip 2.

In this initial position the insert 3, in particular the pushing surface 23, can be pressed towards the fastening clip 3 and the pressure will be transferred to the fastening clip 3 via the engaging surfaces 25a, 25b acting on the retaining members 6a, 6b within the internal cavity 13.

As also shown, in this initial position the deflectable arms 24a, 24b of the insert 3 are angled with respect to the top wall 7 of the fastening clip 2.

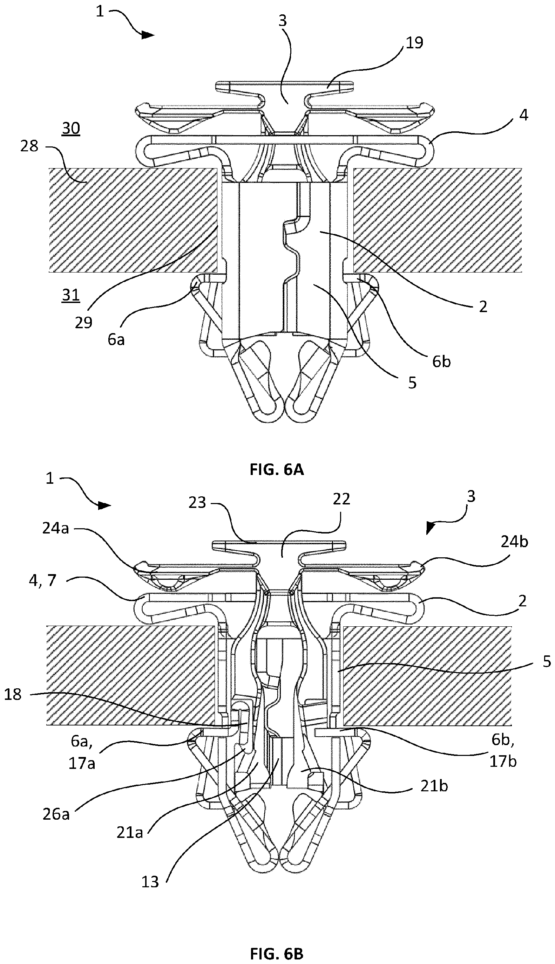

FIGS. 6A and 6B show the fastening clip assembly 1 mounted to a component 28. In particular, the fastening clip assembly 1 is mounted in a hole 29 in the component 28. The component 28 is shown as a single piece having a thickness through which the hole 29 extends. However, in use the component 28 may be two or more pieces laid on top of each other, with the hole 29 extending through both components. In this example the fastening clip 1 may be used to fasten together the different pieces of the component 28. For example, the fastening clip assembly may be used to fasten an airbag assembly to an attachment panel of a vehicle, as set out in the background section.

In the mounted position illustrated in FIGS. 6A and 6B the head portion 4 of the fastening clip 2 is on a first side 30 of the component 28. The head portion 4 may be in contact with the component 28 on the first side 30. The head portion 19 of the insert 3 is also positioned on the first side 30 of the component 28. The body portion 5 of the fastening clip 2 extends through the hole 29 and the body portion (20, see FIGS. 4A, 4b) of the insert 3 is within the internal cavity inside the body portion 5.

As illustrated, in the mounted position the retaining members 6a, 6b engage the opposite side of the component 28 to the head portion 4. The retaining members 6a, 6b thereby retain the fastening clip assembly 1 in the hole 29.

In the mounted position shown in FIGS. 6A and 6B the insert 3 acts to keep the retaining members 6a, 6b in the illustrated position, so that the fastening clip assembly 1 is locked in the hole 29. In particular, as shown in FIG. 6B, in the mounted position the insert 3 has moved relative to the fastening clip 2, further into the body portion 5 of the fastening clip 2. In this position, the hooks 26a, 26b of the legs 21a, 21b engage the ends 18a, 18b of the retaining members 6a, 6b. The hooks 26a, 26b are hooked around the ends 18a, 18b opposite to the head portion 4, such that the hooks 26a, 26b prevent movement of the insert 3 back towards the pre-assembled position shown in FIGS. 5A to 5B.

During mounting of the fastening clip assembly 1 to the hole 29 in the component 28 pressure is applied to the pushing surface 23 and through the insert 3 onto the retaining members 6a, 6b of the fastening clip 2. As the fastening clip 2 passes through the hole 29 the retaining members 6a, 6b are deflected inwardly, into the internal cavity 13, allowing the retaining members 6a, 6b to pass through the hole 29. The legs 21a, 21b are also deflected inwardly because they are in contact with the retaining members 6a, 6b.

Once the retaining members 6a, 6b have passed through the hole 29 they spring outwards into the position shown in FIGS. 6A and 6B. As they spring outwards the engaging surfaces 25a, 25b disengage the retaining members 6a, 6b and the insert 3 can move down into the position shown in FIGS. 6A and 6B. In this position the hooks 26a, 26b engage the ends 18a, 18b of the retaining members 6a, 6b.

Accordingly, when the fastening clip 2 is mounted into the hole 29 such that the retaining members 6a, 6b are in the position shown in FIGS. 6A and 6B, the insert 3 moves further into the fastening clip 2 and acts firstly to lock the fastening clip assembly 1 by the hooks 25a, 25b and also provides a visual indication that the fastening members 6a, 6b have sprung back out to the position shown in FIGS. 6A and 6B to retain the fastening clip assembly 1 in the hole 29.

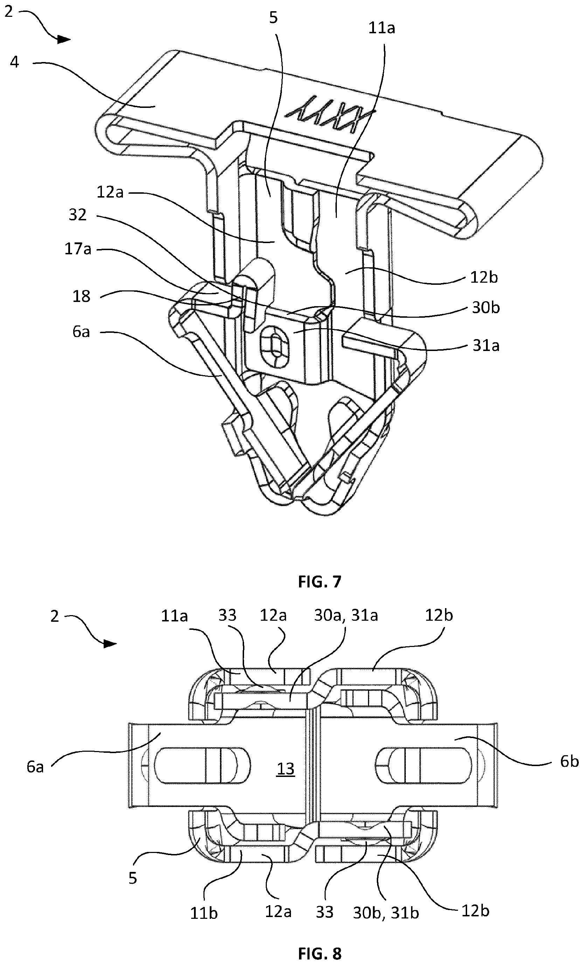

FIG. 7 illustrates an abutment 30a formed within the fastening clip 2 and configured to engage the retaining member 6a as it is deflected inwardly. The engagement between the retaining member 6a and the abutment 30a prevents deformation of the retaining member 6a in the direction that the insertion force is applied, i.e., away from the head portion 4.

As illustrated in FIGS. 7 and 8, the abutment is provided by a tab 31 of the sidewall 11a. The tab 31 extends from the second sidewall section 12b and overlaps the first sidewall section 12a on an internal side, within the internal cavity 13. A top surface of the tab 31 provides the abutment 30.

As shown in FIG. 7, the abutment 30a is aligned with the end 18 of the retaining member 6a. In particular, the end 18 of the retaining member 6a has a notch 32 that aligns with the abutment 30a. The abutment 30a faces the head portion 4 of the fastening clip 2. The abutment 30a is generally parallel to the direction that the retaining member 6a is deflected during mounting of the fastening clip assembly 1. In this way, as the retaining member 6a is deflected inwardly during mounting (see description of FIGS. 6A and 6B) the abutment 30a will prevent the retaining member 6a from being deflected away from the head portion 4, in the direction of the insertion force. This is particularly advantageous as the insertion force is applied to the retaining member 6a via the insert (see FIGS. 5A to 6B). Any deformation of the retaining member 6a may prevent or interrupt the retaining member 6a from springing back out once inserted through the hole in the component, and the abutment 30a prevents this.

In some examples, the abutment 30a may act as a guide along which the retaining member 6a slides as it is deflected inwardly and returns to its extended position. In other examples the abutment 30a may be spaced, by a small amount, from the retaining member 6a in order not to introduce additional friction but still prevent deformation. For example, the abutment 30a may be positioned such that the retaining member 6a only contacts the abutment when it is at or near the maximum inward deflection, or the abutment 30a may be positioned such that the retaining member 6a only makes contact with the abutment 30a when excess force is applied to the retaining member 6a during insertion.

As shown in FIG. 8, a second abutment 30b is formed in the opposing second sidewall 11b. The second abutment 30b is formed by a tab 31b that extends from the second sidewall section 12b and overlaps the first sidewall section 12a of the second sidewall 12b on an internal side. The second abutment 30b works in the same way as the abutment 30a and acts to prevent deformation of the second retaining member 6b.

As shown most clearly in FIG. 8, each tab 31a, 31b also has a protrusion 33 that acts to space the tab 31 from the underlying sidewall portion (12a for the first tab 31a and 12b for the second tab 31b). The protrusion 33 may be formed by a depression in the opposite side of the tab 31a, 31b.

Advantageously, it is relatively simple to form the abutments 30a, 30b by the tabs 31a, 31b that extend from the sidewall portions 12a, 12b. The tabs 31a, 31b can be folded / positioned as the other parts of the fastening clip 2 are folded and positioned, and no additional punching or cutting operation is needed.

As shown in FIGS. 5A to 6B, during mounting of the fastening clip assembly 1 in the hole 19 of the component 28 the insert 3 moves further into the fastening clip 2. During this movement, the deflectable arms 24a, 24b move from an initial position, shown in FIGS. 5A to 5C, in which they are angled with respect to the head portion 4 of the fastening clip 2, to an assembled position, shown in FIGS. 6A and 6B, in which they are generally parallel to the head portion 4. That is, the deflectable arms 24a, 14b are deflected outwards as the insert 3 moves into the fastening clip 2.

The deflectable arms 24a, 24b provide a visual indication that the insert 3 has moved to the mounted position and the fastening clip assembly 1 is properly mounted in the hole 29.

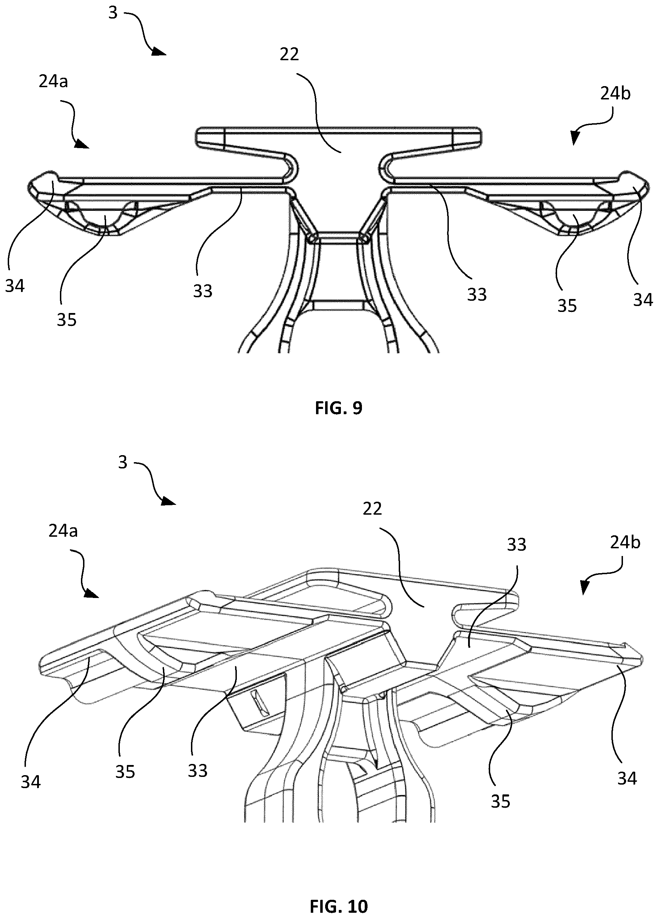

FIGS. 9 and 10 show further detail of the deflectable arms 24a, 24b. As illustrated, the first deflectable arm 24a extends from the central part 22 of the head portion 19. The first deflectable arm comprises an inner section 33 joined to the central part 22, and an outer section 34 extending from the inner section 33. In this way, the inner section 33 is located between the central part 22 and the outer section 34.

The inner section 33 may comprise about 20% to 50% of the length of each deflectable arm 24a, 24b extending away from the head portion 19. The inner section 33 may form a living hinge where it joins the head portion 19, allowing the deflectable arm 24a, 24b to rotate with respect to the head portion 19.

As illustrated, the inner section 33 has a lower thickness than the outer section 34. In particular, the inner section 33 may be less than about 50% of the thickness of the outer section 34, for example less than about 30% of the thickness of the outer section 34. In examples, the inner section 33 may have a thickness of less than about 1 mm, for example less than about 0.5 mm, for example between about 0.4 mm and about 0.5 mm.

The lower thickness of the inner section 33 reduces the bending stiffness of the inner section and therefore of the deflectable arm 24a. Accordingly, the insertion force required to move the insert 3 into the fastening clip (2, see FIG. 6A) is reduced when compared to deflectable arm not having a thinner inner section 33.

Additionally, as shown in FIGS. 9 and 10, the outer section 34 of the first deflectable arm 24a has a protrusion 35 that extends towards the head portion (4, see FIG. 6A) of the fastening clip (2, see FIG. 6A). The outer section 34 of the deflectable arm 24a has a width extending parallel to the inner section 33 and central part 22, and the protrusion 35 has a width less than the width of the outer section 34. The protrusion 35 has a rounded surface for engaging the head portion (4, see FIG. 7A) of the fastening clip (2, see FIG. 6A). Accordingly, the protrusion provides a relatively small surface contact area between the deflectable arm 24a and the head portion (4, see FIG. 7A) of the fastening clip (2, see FIG. 6A) as the deflectable arm 24a is deflected between the positions shown in FIGS. 5A and 6A. This small surface contact area further reduces the insertion force required to move the insert 3 into the fastening clip (2, see FIG. 6A). The rounded profile of the protrusion 35 may also help to prevent jamming between the deflectable arm 24a and the fastening clip.

The second deflectable arm 24b is the same as the first deflectable arm 24a but extends on the opposite side of the central part 22 of the head portion 19.

In some examples, the deflectable arms 24a, 24b may provide a visual indication that the fastening clip assembly 1 is properly mounted to the component 28 as shown in FIGS. 6A and 6B. In particular, the position of the deflectable arms 24a, 24b indicates the position of the insert 3 relative to the fastening clip 2, and when the deflectable arms 24a, 24b are substantially parallel to the head portion 4 of the fastening clip 2 the insert 3 must be in the locked position as shown in FIGS. 6A and 6B.

It will be appreciated by persons skilled in the art that the above embodiments have been described by way of example only and not in any limiting sense, and that various alterations and modifications are possible without departing from the scope of the invention as defined in the appended claims.

## Claims

1. A fastening clip (2) for mounting in a hole of a component, the fastening clip comprising a head portion (4) adapted to be positioned against a first surface of the component and a body portion (5) extending from the head portion and adapted to protrude through the hole in the component,
wherein the body portion comprises an elastically deflectable retaining member (6a, 6b) adapted to deflect inwardly in a deflecting direction as the body portion is pushed through the hole of the component, and to engage a second surface of the component, opposite to the first surface, to retain the fastening clip in the hole of the component, and
wherein the body portion further comprises an abutment (30a) configured to engage the elastically deflectable retaining member as it is deflected inwardly to prevent deformation of the elastically deflectable retaining member in a second direction, generally perpendicular to deflection direction; and
wherein the body portion (5) comprises a sidewall (11a) in a plane parallel to the deflecting direction of the elastically deflectable retaining member, and **characterised in that** the abutment (30a) is formed on the sidewall (11a).

2. The fastening clip of claim 1, wherein the body portion (5) comprises a first section (10a) and a second section (10b) opposite to the first section, wherein the sidewall (11a) comprises a first sidewall section (12b) extending from the first side section (10a) and a second sidewall section (12a) extending from the second sidewall section (10b) to define the sidewall (11a) extending between the first section (10a) and the second section (10b), and wherein a tab (31) of the first sidewall section (12b) overlaps the second sidewall section (12a) and provides the abutment (30a).

3. The fastening clip of claim 2, wherein the tab (31) comprises a protrusion (33) arranged to contact the second sidewall section (12a) to space the tab from the second sidewall section.

4. The fastening clip of claim 2 or claim 3, wherein the elastically deflectable retaining member (6a, 6b) extends from a distal end (15) of the second section (10b) of the body portion (5), opposite to the head portion (4), and wherein the elastically deflectable retaining member is folded inwardly into the body portion and protrudes through an opening (16) in the second section (10b) of the body portion.

5. The fastening clip of claim 4, wherein the elastically deflectable retaining member (6a, 6b) comprises an end (18) disposed within the body section (5), and wherein the end is arranged to engage the abutment (30).

6. A fastening clip assembly (1) for mounting in a hole of a component, the fastening clip assembly comprising the fastening clip (2) of any preceding claim and an insert (3) configured to be inserted through an opening (14) in the head portion (4) of the fastening clip.

## Patentansprüche

1. Befestigungsklammer (2) zur Montage in einer Öffnung einer Komponente, wobei die Befestigungsklammer einen Kopfabschnitt (4), der dazu ausgelegt ist, an einer ersten Oberfläche der Komponente positioniert zu werden, und einen Körperabschnitt (5), der sich von dem Kopfabschnitt erstreckt und dazu ausgelegt ist, durch die Öffnung in der Komponente vorzustehen, aufweist,
wobei der Körperabschnitt ein elastisch auslenkbares Halteelement (6a, 6b) aufweist, das dazu ausgelegt ist, nach innen in eine Auslenkrichtung ausgelenkt zu werden, wenn der Körperabschnitt durch die Öffnung der Komponente geschoben wird, und eine zweite Oberfläche der Komponente, die der ersten Oberfläche gegenüberliegt, in Eingriff zu nehmen, um die Befestigungsklammer in der Öffnung der Komponente zu halten, und
wobei der Körperabschnitt ferner einen Anschlag (30a) aufweist, der so konfiguriert ist, dass er mit dem elastisch auslenkbaren Halteelement in Eingriff kommt, wenn es nach innen ausgelenkt wird, um eine Verformung des elastisch auslenkbaren Halteelements in einer zweiten Richtung, im Allgemeinen senkrecht zu der Auslenkrichtung, zu verhindern; und
wobei der Körperabschnitt (5) eine Seitenwand (11a) in einer Ebene parallel zu der Auslenkrichtung des elastisch auslenkbaren Halteelements aufweist, und **dadurch gekennzeichnet ist, dass** der Anschlag (30a) an der Seitenwand (11a) ausgebildet ist.

2. Befestigungsklammer nach Anspruch 1, wobei der Körperabschnitt (5) einen ersten Abschnitt (10a) und einen zweiten Abschnitt (10b) gegenüber dem ersten Abschnitt aufweist, wobei die Seitenwand (11a) einen ersten Seitenwandabschnitt (12b), der sich von dem ersten Seitenabschnitt (10a) erstreckt, und einen zweiten Seitenwandabschnitt (12a), der sich von dem zweiten Seitenwandabschnitt (10b) erstreckt, aufweist, um die Seitenwand (11a) zu definieren, die sich zwischen dem ersten Abschnitt (10a) und dem zweiten Abschnitt (10b) erstreckt, wobei eine Lasche (31) des ersten Seitenwandabschnitts (12b) den zweiten Seitenwandabschnitt (12a) überlappt und den Anschlag (30a) bereitstellt.

3. Befestigungsklammer nach Anspruch 2, wobei die Lasche (31) einen Vorsprung (33) aufweist, der so angeordnet ist, dass er den zweiten Seitenwandabschnitt (12a) berührt, um die Lasche von dem zweiten Seitenwandabschnitt zu beabstanden.

4. Befestigungsklammer nach Anspruch 2 oder Anspruch 3, wobei sich das elastisch auslenkbare Halteelement (6a, 6b) von einem distalen Ende (15) des zweiten Abschnitts (10b) des Körperabschnitts (5) gegenüber dem Kopfabschnitt (4) erstreckt und wobei das elastisch auslenkbare Halteelement nach innen in den Körperabschnitt gefaltet ist und durch eine Öffnung (16) in dem zweiten Abschnitt (10b) des Körperabschnitts vorsteht.

5. Befestigungsklammer nach Anspruch 4, wobei das elastisch auslenkbare Halteelement (6a, 6b) ein Ende (18) aufweist, das innerhalb des Körperabschnitts (5) angeordnet ist, wobei das Ende so angeordnet ist, dass es in den Anschlag (30) eingreift.

6. Befestigungsklammeranordnung (1) zur Montage in einer Öffnung einer Komponente, wobei die Befestigungsklammeranordnung die Befestigungsklammer (2) nach einem der vorhergehenden Ansprüche und einen Einsatz (3) aufweist, der so konfiguriert ist, dass er durch eine Öffnung (14) in dem Kopfabschnitt (4) der Befestigungsklammer eingeführt wird.

## Revendications

1. Pince de fixation (2) destinée à être montée dans un trou d'un élément, la pince de fixation comprenant une partie de tête (4) adaptée pour être positionnée contre une première surface de l'élément et une partie de corps (5) s'étendant à partir de la partie de tête et adaptée pour faire saillie à travers le trou dans l'élément,
dans laquelle la partie de corps comprend un élément de retenue (6a, 6b) pouvant être fléchi élastiquement adapté pour être fléchi vers l'intérieur dans une direction de fléchissement lorsque la partie de corps est poussée à travers le trou de l'élément, et pour venir en prise avec une seconde surface de l'élément, à l'opposé de la première surface, pour retenir la pince de fixation dans le trou de l'élément, et
dans laquelle la partie de corps comprend en outre une butée (30a) configurée pour venir en prise avec l'élément de retenue pouvant être fléchi élastiquement lorsqu'il est fléchi vers l'intérieur pour empêcher une déformation de l'élément de retenue pouvant être fléchi élastiquement dans une seconde direction, généralement perpendiculaire à la direction de fléchissement ; et
dans laquelle la partie de corps (5) comprend une paroi latérale (11a) dans un plan parallèle à la direction de fléchissement de l'élément de retenue pouvant être fléchi élastiquement, et **caractérisée en ce que** la butée (30a) est formée sur la paroi latérale (11a).

2. Pince de fixation selon la revendication 1, dans laquelle la partie de corps (5) comprend une première section (10a) et une seconde section (10b) opposée à la première section, dans laquelle la paroi latérale (11a) comprend une première section de paroi latérale (12b) s'étendant à partir de la première section latérale (10a) et une seconde section de paroi latérale (12a) s'étendant à partir de la seconde section de paroi latérale (10b) pour définir la paroi latérale (11a) s'étendant entre la première section (10a) et la seconde section (10b), et dans laquelle une patte (31) de la première section de paroi latérale (12b) chevauche la deuxième section de paroi latérale (12a) et fournit la butée (30a).

3. Pince de fixation selon la revendication 2, dans laquelle la patte (31) comprend une saillie (33) agencée pour entrer en contact avec la seconde section de paroi latérale (12a) pour espacer la patte de la seconde section de paroi latérale.

4. Pince de fixation selon la revendication 2 ou la revendication 3, dans laquelle l'élément de retenue (6a, 6b) pouvant être fléchi élastiquement s'étend à partir d'une extrémité distale (15) de la seconde section (10b) de la partie de corps (5), à l'opposé de la partie de tête (4), et dans laquelle l'élément de retenue pouvant être fléchi élastiquement est plié vers l'intérieur dans la partie de corps et fait saillie à travers une ouverture (16) dans la seconde section (10b) de la partie de corps.

5. Pince de fixation selon la revendication 4, dans laquelle l'élément de retenue (6a, 6b) pouvant être fléchi élastiquement comprend une extrémité (18) disposée à l'intérieur de la section de corps (5), et dans laquelle l'extrémité est agencée pour venir en prise avec la butée (30).

6. Ensemble de pince de fixation (1) destiné à être monté dans un trou d'un élément, l'ensemble de pince de fixation comprenant la pince de fixation (2) selon l'une quelconque des revendications précédentes et un insert (3) configuré pour être inséré à travers une ouverture (14) dans la partie de tête (4) de la pince de fixation.
